# EUROPEAN PATENT APPLICATION

(11) **EP 4 607 433 A1**
(43) Date of publication of application: **27.08.2025**
(21) Application number: 25159071.7
(22) Date of filing: 20.02.2025
(51) Int. Cl.: G06Q 30/0251, G06Q 10/087, G06Q 30/0601

(54) **REAL-TIME INVENTORY MAPPING AND NOTIFICATIONS FOR SAVED SEARCHES**

(30) Priority: 23.02.2024 US 202418586017
(71) Applicant: eBay Inc., San Jose, CA 95125 (US)
(72) Inventor: SUBRAMANIAM SIVASHANMUGAM, Udaiyaraj, SAN JOSE, 95125 (US); SRINIVASAN, Arun Nenmeli, SAN JOSE, 95125 (US); BISWAS, Arup, SAN JOSE, 95125 (US); GONGIDI, Praveen Kumar, SAN JOSE, 95125 (US); KANDURU, Naresh Kumar, SAN JOSE, 95125 (US); ZENG, Jinlin, SAN JOSE, 95125 (US); CHENNA, Venu Gopal, SAN JOSE, 95125 (US)
(74) Representative: Müller-Boré & Partner Patentanwälte PartG mbB

(57) **Abstract**

A hierarchical data structure is leveraged to provide real-time inventory mapping and notification. Behavioral data is received from a user indicating an interest in a category or in a seller. The behavioral data may correspond to the user saving a search comprising one or more keywords or to the user following the seller. The user is dynamically associated with the interest in the hierarchical data structure. Upon detecting a configurable trigger, item data corresponding to an item in an inventory of items is retrieved. The configurable trigger may be the item corresponding to the category or seller being listed in an inventory, an incentive being provided for the item by the seller, or the item being identified as a fit for another item associated with the user. **In** aspects, the item data is communicated to the user in real-time.

## Description

### BACKGROUND

Many product search systems allow users to submit search queries consisting of a few words or terms. The search systems return a list of relevant items related to the search queries that are available within a corresponding site. Some search systems enable users to save search queries. Sending communications, specifically listing match notifications, to users who have saved search queries improves customer engagement and retention. A typical search system may have millions of saved searches. In order to efficiently and effectively send listing match notifications, a batch job may be scheduled (e.g., once per day) that scans the inventory of the search system and finds matches for each saved search.

### SUMMARY

At a high level, aspects described herein relate to search engines. More particularly, aspects described herein relate to a search engine that provides real-time inventory mapping and notifications for saved searches. To do so, a hierarchical data structure is leveraged to associate a user with an interest. Initially, behavioral data is received from a user indicating an interest in a category or in a seller. The behavioral data may correspond to the user saving a search comprising one or more keywords or to the user following the seller. The user is dynamically associated with the interest in the hierarchical data structure. Upon detecting a configurable trigger, item data corresponding to an item in an inventory of items is retrieved. The configurable trigger may be the item corresponding to the category or seller being listed in an inventory, an incentive being provided for the item by the seller, or the item being identified as a fit for another item associated with the user. In aspects, the item data is communicated to the user in real-time.

The Summary is intended to introduce a selection of concepts in a simplified form that is further described in the Detailed Description of this disclosure. The Summary is not intended to identify key or essential features of the claimed subject matter, nor is it intended to be used as an aid in determining the scope of the claimed subject matter. Additional objects, advantages, and novel features of the technology will be provided, and in part will become apparent to those skilled in the art upon examination of the disclosure or learned through practice of the technology.

### BRIEF DESCRIPTION OF THE DRAWINGS

The present technology is described in detail below with reference to the attached drawing figures, wherein:
FIG. 1 is a block diagram of an example operating environment suitable for implementing aspects of the technology;
FIG. 2 is an example hierarchical data structure, in accordance with an aspect of the technology described herein;
FIG. 3 is an example system diagram, in accordance with an aspect of the technology described herein;
FIG. 4 is a flow diagram showing an example method, in accordance with an aspect of the technology described herein; and
FIG. 5 is an example computing device suitable for implementing the described technology, in accordance with an aspect described herein.

### DETAILED DESCRIPTION

The subject matter of aspects of the technology is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

In addition, words such as "a" and "an," unless otherwise indicated to the contrary, may also include the plural as well as the singular. Thus, for example, the constraint of "a feature" is satisfied where one or more features are present. Furthermore, the term "or" includes the conjunctive, the disjunctive, and both (*a* or *b* thus includes either *a* or *b,* as well as *a* and *b*).

While search engines are an incredibly useful tool for providing search results for received search queries, shortcomings in existing search technologies often result in the consumption of an unnecessary quantity of computing resources (e.g., I/O costs, network packet generation costs, throughput, memory consumption, etc.). When performing searches, users are often seeking search results in a particular category or from a particular seller. Even if the search technology allows the user to save searches, current search engines are unable to associate users with the category or seller in real-time. Moreover, if a seller lists an item in the particular category or the particular seller lists an item, current search engines are unable to notify the user in real-time; rather, at best, notifications are scheduled on a once-per-day basis. For scarce items, timing is critical as the item may be purchased by another user before the user is even notified it has been listed.

This requires the user to perform multiple searches which unnecessarily consumes various computing resources of the search system, such as processing power, network bandwidth, throughput, memory consumption, etc. In some instances, the multiple attempts to identify items may even completely fail to satisfy the user's goal, thus requiring the user to spend even more time and computing resources on the search process by repeating the process of issuing additional queries until the user finally accesses the desired content items. In some cases, the user may even give up searching because the search engine was not able to return desired search results after multiple searches.

These shortcomings of existing search technologies adversely affect computer network communications. For example, each time a query is received, contents or payload of the search queries is typically supplemented with header information or other metadata, which is multiplied by all the additional queries needed to obtain the particular item(s) the user desires. As such, there are throughput and latency costs by repetitively generating this metadata and sending it over a computer network. In some instances, these repetitive inputs (e.g., repetitive clicks, selections, or queries) increase storage device I/O (e.g., excess physical read/write head movements on non-volatile disk) because each time a user inputs unnecessary information, such as inputting several queries, the computing system often has to reach out to the storage device to perform a read or write operation, which is time consuming, error prone, and can eventually wear on components, such as a read/write head. Further, if multiple users repetitively issue queries, it is expensive because processing queries consumes a lot of computing resources. For example, for some search engines, a query execution plan may need to be calculated each time a query is issued, which requires a search system to find the least expensive query execution plan to fully execute the query. This decreases throughput and increases network latency, and can waste valuable time.

Aspects of the technology described herein improve the functioning of the computer itself in light of these shortcomings in existing search technologies by providing a solution that leverages a hierarchical data structure to associate users with interests. The users can be dynamically associated with interests in the hierarchical data structure and, upon detecting configurable triggers, notifications can be communicated to the users in real-time. As can be appreciated, better results are achieved compared to traditional search engines that do not provide real-time mapping and notifications and/or require multiple search queries from the user.

Aspects of the technology described herein provide a number of improvements over existing search technologies. For instance, computing resource consumption is improved relative to existing technologies. In particular, the search frequency is reduced by dynamically associating users with interests and providing notifications in real-time. This eliminates (or at least reduces) the repetitive user queries because the search results for saved searches are provided in real-time as items are listed. Moreover, because a hierarchical database structure is leveraged, only relevant portions of the database structure are queried when an item is listed, rather than the entire database structure. Accordingly, aspects of the technology described herein decrease computing resource consumption, such as processing power and network bandwidth.

In like manner, aspects of the technology described herein improve storage device or disk I/O and query execution functionality. As described above, the hierarchical database structure enables queries to much smaller portions of the database when an item is listed. In contrast, current search technologies run batch jobs on a daily basis against the entire database for all saved searches. This is much less efficient for disk I/O because the entire database is queried. Accordingly, there is not as much wear due to query execution functionality.

Having briefly described an overview of aspects of the technology described herein, an exemplary operating environment in which aspects of the technology described herein may be implemented is described below.

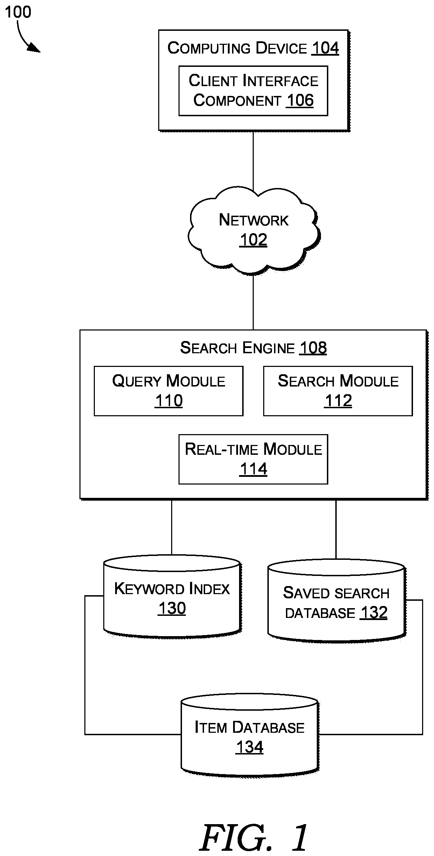

Turning now to FIG. 1, a block diagram is provided showing an operating environment 100 in which aspects of the present disclosure may be employed. It should be understood that this and other arrangements described herein are set forth only as examples. Other arrangements and elements (e.g., machines, interfaces, functions, orders, and groupings of functions) can be used in addition to or instead of those shown, and some elements may be omitted altogether for the sake of clarity. Further, many of the elements described herein are functional entities that may be implemented as discrete or distributed components or in conjunction with other components, and in any suitable combination and location. Various functions described herein as being performed by one or more entities may be carried out by hardware, firmware, and/or software. For instance, some functions may be carried out by a processor executing instructions stored in memory.

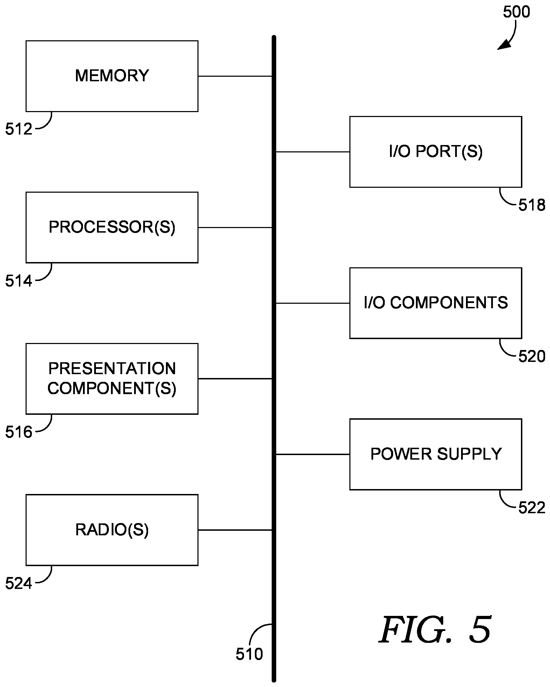

Among other components not shown, example operating environment 100 includes a network 102; a computing device 104 having a client interface component 106; search engine 108 having a query module 110, a search module 112, and a real-time module 114; keyword index 130; saved search database; and item database 134. It should be understood that environment 100 shown in FIG. 1 is an example of one suitable operating environment. Each of the components shown in FIG. 1 may be implemented via any type of computing device, such as computing device 500, described below in connection to FIG. 5, for example.

These components may communicate with each other via the network 102, which may include, without limitation, one or more local area networks (LANs) and/or wide area networks (WANs). In exemplary implementations, the network 102 comprises the Internet and/or a cellular network, amongst any of a variety of possible public and/or private networks. In aspects, the network 102 may include multiple networks, as well as being a network of networks, but is shown in more simple form so as to not obscure other aspects of the present disclosure.

It should be understood that any number of user devices, servers, and data sources may be employed within the operating environment 100 within the scope of the present disclosure. Each may comprise a single device or multiple devices cooperating in a distributed environment. For instance, the search engine 108 may be provided via multiple devices arranged in a distributed environment that collectively provide the functionality described herein. Additionally, other components not shown may also be included within the distributed environment.

The computing device 104 can be a client device on the client-side of the operating environment 100, while the search engine 108 can be on the server-side of operating environment 100. For example, the search engine 108 can comprise server-side software designed to work in conjunction with client-side software on the computing device 104 so as to implement any combination of the features and functionalities discussed in the present disclosure. This division of the operating environment 100 is provided to illustrate one example of a suitable environment, and there is no requirement for each implementation that any combination of the search engine 108 and the computing device 104 remain as separate entities. While the operating environment 100 illustrates a configuration in a networked environment with a separate computing device, search engine, keyword index, and item database, it should be understood that other configurations can be employed in which components are combined. For instance, in some configurations, a computing device may also serve as a data source and/or may provide search capabilities.

The computing device 104 may comprise any type of computing device capable of use by a user. For example, in one aspect, the computing device 104 may be the type of computing device 500 described in relation to FIG. 5 herein. By way of example and not limitation, a computing device may be embodied as a personal computer (PC), a laptop computer, a mobile or mobile device, a smartphone, a tablet computer, a smart watch, a wearable computer, a personal digital assistant (PDA), an MP3 player, global positioning system (GPS) or device, video player, handheld communications device, gaming device or system, entertainment system, vehicle computer system, embedded system controller, remote control, appliance, consumer electronic device, a workstation, or any combination of these delineated devices, or any other suitable device where search queries may be performed via the client interface component 106 or where notifications can be presented via the client interface component 106. A user may be associated with the computing device 104. The user may communicate with the search engine 108 through one or more computing devices, such as the computing device 104.

At a high level, the search engine 108 receives a text-based search query (e.g., a natural language query or structured query) or an audio query comprising voice or other audio input from the computing device 104 (or another computing device not depicted). In aspects, the text-based query or the audio query comprises one or more keywords. The search query may comprise any type of input from a user for initiating a search comprising one or more keywords. In response to receiving the search query, the search engine 108 generates and ranks text-based results in a single set of search results.

In some configurations, the search engine 108 may be embodied on one or more servers. In other configurations, the search engine 108 may be implemented at least partially or entirely on a user device, such as computing device 500 described in FIG. 5. The search engine 108 (and its components) may be embodied as a set of compiled computer instructions or functions, program modules, computer software services, or an arrangement of processes carried out on one or more computer systems.

As shown in FIG. 1, the search engine 108 includes the query module 110, the search module 112, and the real-time module 114. In one aspect, the functions performed by modules of the search engine 108 are associated with one or more applications, services, or routines. In particular, such applications, services, or routines may operate on one or more user devices (such as computing device 104) or servers (e.g., the search engine 108), or may be distributed across one or more user devices and servers. In some aspects, the applications, services, or routines may be implemented in the cloud. Moreover, in some aspects, these modules of the search engine 108 may be distributed across a network, including one or more servers and client devices (such as computing device 104), in the cloud, or may reside on a user device such as computing device 104.

In addition, the modules of the search engine 108 and the functions and services performed by these modules may be implemented at appropriate abstraction layer(s) such as an operating system layer, an application layer, or a hardware layer, etc. Alternatively, or in addition, the functionality of these modules (or the aspects of the technology described herein) can be performed, at least in part, by one or more hardware logic components. For instance, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc. Further, although functionality is described herein with regards to specific modules shown in search engine 108, it is contemplated that in some aspects, functionality of one of the modules can be shared or distributed across other modules.

The query module 110 receives a search query comprising one or more text-based keywords. For example, a user may input a search query at computing device 104 via a client interface component 106 that provides access to a search engine. As previously mentioned, the search query may comprise any type of input from a user for initiating a search comprising one or more keywords.

The query module 110 may be configured to receive the search. Additionally, the query module 110 may be configured to communicate the search query to other modules of search engine 108, such as the search module 112 or real-time module 114, for example. Further, the user query module 110 may be configured to suggest and provide refinements of a search query, generate and provide navigation modules, categorize or categorize the plurality of items, generate and provide autosuggestions, or provide search results to computing devices, such as computing device 104.

The query module 110 may cause one or more graphical user interface displays of various computing devices to display the search query, suggested refinements to the search query, navigation modules, categories of items responsive to the search query, autosuggestions, or items responsive to the search query. In aspects, query module 110 causes the client interface component 106, through which the search query is input (e.g., by a user in a search tool on a web page), to display the search query, suggested refinements, navigation modules, categories of items responsive to the search query, autosuggestions, or items responsive to the search query. Further, the query module 110 may comprise an Application Program Interface (API) that allows applications to submit the search query (and optionally other information, such as user information, contextual information, and the like) for receipt by the search engine 108.

The search module 112 identifies search results in response to search queries processed against item database 134, which is described in more detail below. For example, the search module 112 may query the keyword index 130 to identify results that satisfy criteria of the search query. In some aspects, the results identified in the keyword index 130 are mapped to items in the item database 134. For clarity, an item may be an item listing for a product and may include a variety of additional information, such as price, price range, quality, condition, ranking, material, brand, manufacturer, etc.

The search module 112 also ranks the search results. In some aspects, information learned from historical search sessions or user feedback is utilized to optimize the ranking of the search results. For example, selections made by other users submitting similar queries may be leveraged to increase or decrease the ranking of individual items within the search results.

In some aspects, feedback may be stored in search logs. The search logs may be embodied on a plurality of databases, wherein one or more of the databases comprise one or more hardware components that are part of the search engine 108. In aspects, the search log are configured for storing information regarding historical search sessions for users, including, for instance, search queries submitted by a plurality of users via client interface components (e.g., client interface component 106), search results associated with the historical search queries, item listings for the search results, or user interactions (e.g., hovers, click-throughs, purchases, etc.) associated with the search results. In some embodiments, the search logs store a timestamp (e.g., day, hour, minute, second, etc.) for each user query, search result, item listing associated with the search result, user interaction with the search result, and so forth.

In addition, the information stored in search logs regarding historical search sessions may include other result selection information, such as subsequent filters selected in response to receiving search results and item listings. In some embodiments, result selection information may include the time between two successive selections of search results, the language employed by the user, and the country where the user is likely located (e.g., based on a server used to access the search engine 108). In some implementations, other information associated with the historical search sessions that is stored may comprise user interactions with a ranking displayed within an item listing, negative feedback displayed with the item listing, and other information such as whether the user clicked or viewed a document associated with an item listing. User information including user cookies, cookie age, IP (Internet Protocol) address, user agent of the browser, and so forth, may also be stored in search logs. In some embodiments, the user information is recorded in the search logs for an entire user session or multiple user sessions.

The keyword index 130, saved search database 132, and item database 134 may comprise data sources or data systems, which are configured to make data available to any of the various constituents of operating environment 100. The keyword index 130, saved search database 132, and item database 134 may be discrete components separate from search engine 108 or may be incorporated or integrated into the search engine 108 or other components the operating environment 100. Among other things, item database 134 can store search results associated with search queries about which information can be indexed in keyword index 130. Moreover, item database 134 can store search results associated with users and categories which are associated in a hierarchical data structure in saved search database 132.

The keyword index 130 can take the form of an inverted index, but other forms are possible. The keyword index 130 stores the information about items in a manner that allows the search engine 108 to efficiently identify search results for a search query. The search engine 108 can be configured to run any number of queries on the keyword index 130. The keyword index 130, according to an example embodiment, may include an inverted index storing a mapping from textual search queries to items in item database 134.

The saved search database 132 can take the form of a hierarchical data structure, but other forms are possible. The saved search database 132 stores information about saved searches (i.e., associations between users and categories or users and sellers) that allows the search engine 108 to efficiently, and in real-time, identify search results for a saved search query when a relevant item is listed by a buyer in item database 134. The search engine 108 can be configured to run any number of queries, in real-time, on the saved search database 132. The saved search database 132, according to an example embodiment, may include a hierarchical data structure storing a mapping between users and categories or users and sellers to items in item database 134.

The real-time module 114 leverages the saved search database 132 to provide real-time inventory mapping and notification. The real-time module 114 may receive behavioral data from a user indicating an interest in a category or seller. The behavioral data may correspond to a user saving a search comprising one or more keywords. The one or more keywords may be associated with a particular category. For example, if the one or more keywords are "red shoe," the category may be "shoes." In another example, if the one or more keywords are "men's shoes red," the category may be "men's shoes." The behavioral data may correspond to the user following a particular seller. In either example, the real-time module dynamically stores the association between the user and the category or the user and the seller in the saved search database 132.

Upon detecting a configurable trigger, the real-time module communicates item data to the user in real-time. In some aspects, the configurable trigger is an item corresponding to the category being listed in an inventory. In some aspects, the configurable trigger is an item corresponding to the seller being listed in an inventory. In some aspects, the configurable trigger is an incentive being provided for the item or by the seller. In some aspects, the configurable trigger is the item being identified as a fit for another item associated with the user.

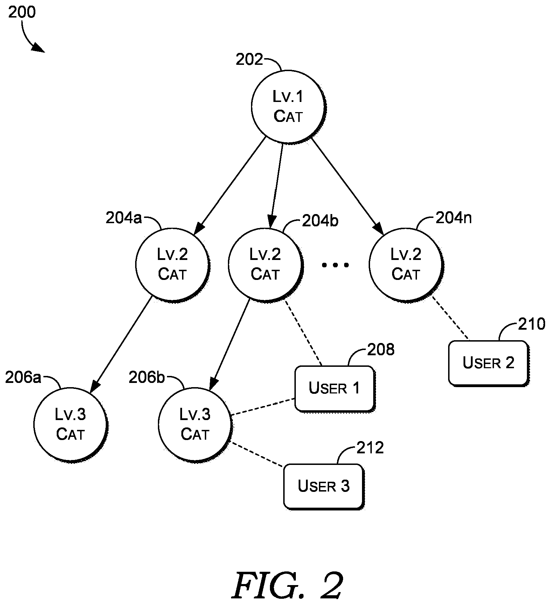

Turning now to FIG. 2, an example hierarchical data structure 200 is shown, in accordance with an aspect of the technology described herein. As shown, the hierarchical data structure 200 is used to maintain category life cycle and mapping between users 208, 210, 212 and categories (or sellers) 202, 204a-204n, 206a, 206b. In this hierarchical data structure, users and categories of interest (or sellers of interest) are associated for the corresponding user in real-time. This multi-level real-time relationship with users and categories (or sellers) has numerous benefits. For instance, when a user expresses interest in a category (or seller), the association can be created dynamically, allowing for immediate updates. Likewise, if any user loses interest in a category, the association can be dynamically updated. By using this multi-level hierarchical data structure, a more efficient and effective experience can be provided to users.

The hierarchical data structure 200 can be queried in a number of ways. For example, the hierarchical data structure 200 can be queried to determine which categories a particular user is interested in. For example, user 1 208 is interested in LV 2 CAT 204b and LV 3 CAT 206b, while user 2 210 is interested in LV 2 CAT 204n and user 3 212 is interested in LV 3 CAT 206b. In another example, the hierarchical data structure 200 can be queried to determine which users are interested in a particular category. For example, user 1 208 and user 3 212 are interested in LV 3 CAT 206b.

Additionally, hierarchical data structure 200 enables queries restricted to certain levels, such as determining which users are directly connected to a particular category, and which users are indirectly connected through subcategories. Restricting queries to certain levels enables highly specific and much more efficient searches. The efficiency gain enables real-time mapping and notifications.

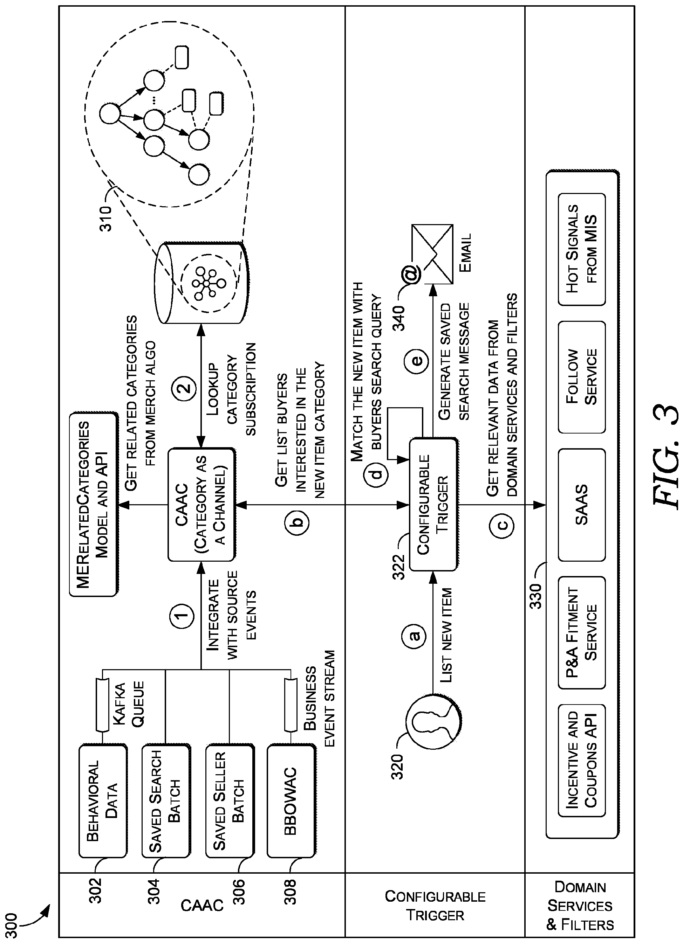

In FIG. 3, an example system diagram 300 is shown, in accordance with an aspect of the technology described herein. The system 300 illustrates various forms of behavioral data being leveraged to indicate an interest in a category or seller. For example, the behavioral data may comprise interactions 302 with a particular category or seller. In another example, the behavioral data may comprise a saved search 304 corresponding to a category or a saved search 306 corresponding to a seller. Or, the behavioral data may comprise buying activity data (e.g., buying though Buy It Now, auction bid, make a best offer, watch an item, ask a seller a question, add item to shopping cart, etc.). The behavioral data is leveraged to create associations between users and categories (or sellers) in a hierarchical data structure 310. In some aspects, an API may be utilized to return merchandise related categories model data and related information.

As also shown, a seller 320 may list a new item which may represent a configurable trigger 322. The system 300 may identify a category corresponding to the new item and query the hierarchical data structure 310 for buyers interested in the category (or seller). At the same time, the system 300 may also leverage domain services and filters to get relevant data 330. For example, incentive and coupons service may identify incentives and/or coupons pertaining to the category (or seller). In another example, parts and accessories fitment service may respond whether a particular part fits the make and model of a vehicle owned by the buyer. In another example, follow service may return a list of followers (e.g., buyers following a seller and a list of saved searches). In yet another example, hot signals from marketing inventory service returns data related to the inventory item demand. Once the new item is matched with interested users and all domain services and filters are applied a notification 340 (e.g., email) can be sent to the users in real-time.

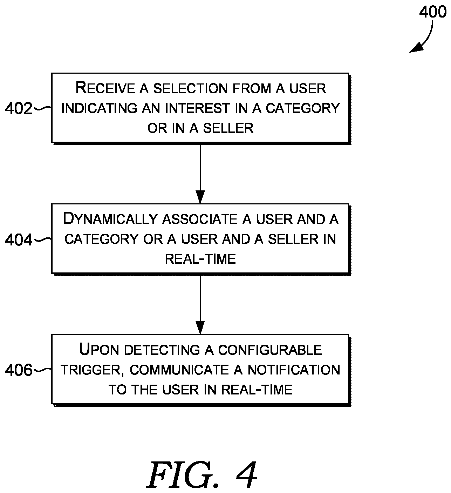

FIG. 4 is a flow diagram showing a method 400 for providing real-time inventory mapping and notification, in accordance with an aspect of the technology described herein. The method 400 may be performed, for instance, by the search engine 108 of FIG. 1. As shown at block 402, behavioral data is received from a user indicating an interest in a category or in a seller. In some aspects, the behavioral data corresponds to the user saving a search comprising one or more keywords. In other aspects, the behavioral data corresponds to the user following the seller.

At block 404, a user and a category or a user and a seller are dynamically associated within a data structure. The data structure may be a hierarchical data structure (e.g., a graph database). In some aspects, a selection may be received from the user indicating to remove the interest in the category or in the seller. Accordingly, the user and the category or the user and the seller may be dynamically disassociated within the data structure.

At block 406, upon detecting a configurable trigger, item data is communicated to the user in real-time. In some aspects, the configurable trigger is the item corresponding to the category being listed in an inventory. In some aspects, the configurable trigger is the item corresponding to the seller being listed in an inventory. In some aspects, the configurable trigger is an incentive being provided for the item or by the seller. In some aspects, the configurable trigger is the item being identified as a fit for another item associated with the user. Based on detecting the configurable trigger, the item data corresponding to an association between the user and the category or the user and the seller may be retrieved.

With reference to FIG. 5, computing device 500 includes a bus 510 that directly or indirectly couples the following devices: memory 512, one or more processors 514, one or more presentation components 516, one or more input/output (I/O) ports 518, one or more I/O components 520, and an illustrative power supply 522. Bus 510 represents what may be one or more busses (such as an address bus, data bus, or combination thereof). Although the various blocks of FIG. 5 are shown with lines for the sake of clarity, in reality, these blocks represent logical, not necessarily actual, components. For example, one may consider a presentation component such as a display device to be an I/O component. Also, processors have memory. The inventors hereof recognize that such is the nature of the art and reiterate that the diagram of FIG. 5 is merely illustrative of an exemplary computing device that can be used in connection with one or more aspects of the present technology. Distinction is not made between such categories as "workstation," "server," "laptop," "handheld device," etc., as all are contemplated within the scope of FIG. 5 and with reference to "computing device."

Computing device 500 typically includes a variety of computer-readable media. Computer-readable media can be any available media that can be accessed by computing device 500 and includes both volatile and nonvolatile media, removable and non-removable media. By way of example, and not limitation, computer-readable media may comprise computer-storage media and communication media.

Computer-storage media includes both volatile and nonvolatile, removable and non-removable media implemented in any method or technology for storage of information such as computer-readable instructions, data structures, program modules, or other data. Computer storage media includes, but is not limited to, RAM, ROM, EEPROM, flash memory or other memory technology, CD-ROM, digital versatile disks (DVDs) or other optical disk storage, magnetic cassettes, magnetic tape, magnetic disk storage or other magnetic storage devices, or any other medium which can be used to store the desired information and which can be accessed by computing device 500. Computer storage media does not comprise signals per se.

Communication media typically embodies computer-readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media, such as a wired network or direct-wired connection, and wireless media, such as acoustic, RF, infrared, and other wireless media. Combinations of any of the above should also be included within the scope of computer-readable media.

Memory 512 includes computer storage media in the form of volatile and/or nonvolatile memory. The memory may be removable, non-removable, or a combination thereof. Exemplary hardware devices include solid-state memory, hard drives, optical-disc drives, etc. Computing device 500 includes one or more processors 514 that read data from various entities such as memory 512 or I/O components 520. Presentation component(s) 516 presents data indications to a user or other device. Exemplary presentation components include a display device, speaker, printing component, vibrating component, and the like.

The I/O ports 518 allow computing device 500 to be logically coupled to other devices, including I/O components 520, some of which may be built in. Illustrative components include a microphone, joystick, game pad, satellite dish, scanner, printer, wireless device, etc.

The I/O components 520 may provide a natural user interface (NUI) that processes air gestures, voice, or other physiological inputs generated by a user. In some instances, inputs may be transmitted to an appropriate network element for further processing. An NUI may implement any combination of speech recognition, touch and stylus recognition, facial recognition, biometric recognition, gesture recognition both on screen and adjacent to the screen, air gestures, head and eye tracking, and touch recognition associated with displays on the computing device 500. The computing device 500 may be equipped with depth cameras, such as stereoscopic camera systems, infrared camera systems, RGB camera systems, and combinations of these, for gesture detection and recognition. Additionally, the computing device 500 may be equipped with accelerometers or gyroscopes that enable detection of motion. The output of the accelerometers or gyroscopes may be provided to the display of the computing device 500 to render immersive augmented reality or virtual reality.

Some aspects of computing device 500 may include one or more radio(s) 524 (or similar wireless communication components). The radio 524 transmits and receives radio or wireless communications. The computing device 500 may be a wireless terminal adapted to receive communications and media over various wireless networks. Computing device 500 may communicate via wireless protocols, such as code division multiple access ("CDMA"), global system for mobiles ("GSM"), or time division multiple access ("TDMA"), as well as others, to communicate with other devices. The radio communications may be a short-range connection, a long-range connection, or a combination of both a short-range and a long-range wireless telecommunications connection. When we refer to "short" and "long" types of connections, we do not mean to refer to the spatial relation between two devices. Instead, we are generally referring to short range and long range as different categories, or types, of connections (i.e., a primary connection and a secondary connection). A short-range connection may include, by way of example and not limitation, a Wi-Fi^{®} connection to a device (e.g., mobile hotspot) that provides access to a wireless communications network, such as a WLAN connection using the 802.11 protocol; a Bluetooth connection to another computing device is a second example of a short-range connection, or a near-field communication connection. A long-range connection may include a connection using, by way of example and not limitation, one or more of CDMA, GPRS, GSM, TDMA, and 802.16 protocols.

## Claims

1. A method of providing real-time inventory mapping and notification, the method comprising:
receiving behavioral data from a user indicating an interest in a category or in a seller;
dynamically associating the user and the category or the user and the seller within a data structure; and
upon detecting a configurable trigger, communicating item data to the user in real-time.

2. The method of claim 1, further comprising receiving a selection from the user indicating to remove the interest in the category or in the seller.

3. The method of claim 2, further comprising dynamically disassociating the user and the category or the user and the seller within the data structure.

4. The method of any one of the preceding claims, further comprising, based on detecting the configurable trigger, retrieving the item data corresponding to an association between the user and the category or the user and the seller.

5. The method of any one of the preceding claims, wherein the data structure is a graph database.

6. The method of any one of the preceding claims, wherein the behavioral data corresponds to the user saving a search comprising one or more keywords; or
wherein the behavioral data corresponds to the user following the seller.

7. The method of any one of the preceding claims, wherein the configurable trigger is one of: the item corresponding to the category being listed in an inventory, the item corresponding to the seller being listed in an inventory, an incentive being provided for the item or by the seller, or the item being identified as a fit for another item associated with the user.

8. One or more transitory or non-transitory computer storage media storing computer-readable instructions that when executed by a processor, cause the processor to perform operations, the operations comprising:
receiving behavioral data from a user indicating an interest in a category or in a seller;
dynamically associating the user and the category or the user and the seller in a data structure;
upon detecting a configurable trigger, retrieving item data corresponding to an association between the user and the category or the user and the seller; and
communicating the item data to the user in real-time.

9. The media of claim 8, further comprising, further comprising receiving a selection from the user indicating to remove the interest in the category or in the seller.

10. The media of claim 9, further comprising dynamically disassociating the user and the category or the user and the seller within the data structure.

11. The media of any one of claims 8 to 10, wherein the behavioral data corresponds to the user saving a search comprising one or more keywords, or wherein the behavioral data corresponds to the user following the seller.

12. The media of any one of claims 8 to 11, wherein the data structure is a graph database.

13. The media of any one of claims 8 to 12, wherein the configurable trigger is one of: the item being listed in an inventory of items, an incentive being provided for the item or by the seller, the item being identified as a fit for another item associated with the user.

14. A system for providing real-time inventory mapping and notification:
at least one processor; and
one or more computer storage media storing computer-readable instructions that when executed by the at least one processor, cause the at least one processor to perform operations comprising:
receiving behavioral data from a user indicating an interest in a category or in a seller;
dynamically associating the user with the interest in a data structure;
upon detecting a configurable trigger, retrieving item data corresponding to an item in an inventory of items; and
communicating the item data to the user in real-time.

15. The system of claim 14, wherein the configurable trigger is one of: the item being listed in an inventory, an incentive being provided for the item or by the seller, the item being identified as a fit for another item associated with the user.
